# EUROPÄISCHE PATENTSCHRIFT

(11) **EP 1 380 495 B1**
(45) Veröffentlichungstag und Bekanntmachung des Hinweises auf die Patenterteilung: **18.07.2007**
(21) Anmeldenummer: 03013778.0
(22) Anmeldetag: 18.06.2003
(51) Int. Cl.: B62D 27/06, B62D 21/09, F16B 5/02

(54) **Karosserie-Hohlträger mit einem Gewindeeinlegerteil**
Hollow beam with a threaded insert for a vehicle body
Poutre creuse avec insert fileté pour carrosserie de véhicule

(30) Priorität: 12.07.2002 DE 10231863
(43) Veröffentlichungstag der Anmeldung: 14.01.2004
(73) Patentinhaber: AUDI AG, 85045 Ingolstadt (DE)
(72) Erfinder: Carle, Klaus-Dieter, 74074 Heilbronn (DE)
(74) Vertreter: Patzelt, Heike Anna Maria

(56) Entgegenhaltungen:
- EP-A- 0 425 919
- EP-A- 0 841 240
- EP-A- 1 111 251

## Beschreibung

Die Erfindung betrifft einen Karosserie-Hohlträger mit einem Gewindeeinlegerteil nach dem Oberbegriff des Anspruchs 1.

Ein Karosserie-Hohlträger hat regelmäßig nur relativ geringe Wandstärken, so dass daran unmittelbar angebrachte Bauteilverbindungen, z. B. durch Schrauben in ggf. Schweißmuttern, Nieten oder Clipsen, nur wenig belastbar sind. Für stabile, hoch belastbare Bauteilverbindungen ist es erforderlich einerseits Abstützkräfte auf einen großen Hohlträgerwandbereich zu übertragen und andererseits eine größere Wandstärke, insbesondere zur Einbringung mehrerer Gewindegänge für eine Schraubverbindung , zu schaffen.

Dazu ist ein gattungsgemäßer Karosserie-Hohlträger mit einem Gewindeeinlegerteil allgemein bekannt, welches im Hohlträger aufgenommen und fixiert ist und sich mit einer Abstützfläche an einer Abstützwandinnenseite des Hohlträgers relativ großflächig abstützt. Im Gewindeeinlegerteil ist wenigstens eine Gewindebohrung im Bereich der Abstützfläche angebracht, wobei die wenigstens eine Gewindebohrung mit einer zugeordneten Hohlträgerbohrung fluchtet, so dass zur Herstellung einer Anschraubverbindung von der Hohlträgeraußenseite her eine Schraube einschraubbar ist.

Konkret ist das Gewindeeinlegerteil als Gewindeplatte ausgeführt, in der die Gewindebohrung angeordnet ist. Die Gewindeplatte wird von innen her an der Abstützwandinnenseite des Hohlträgers abgestützt und dort mit geeigneten Maßnahmen so fixiert, dass die Gewindebohrung in der Gewindeplatte der Hohlträgerbohrung fluchtend zugeordnet ist und von der Hohlträgeraußenseite her eine Schraube einschraubbar ist. In der relativ geringen Plattenstärke einer solchen Gewindeplatte sind nur wenige Gewindegänge der Gewindebohrung enthalten und die kraftverteilende Abstützung durch den Plattenbereich entspricht im wesentlichen nur einer Wandverdoppelung, was noch keine hochbelastbare Anschraubverbindung ermöglicht.

Aus der EP 0 841 240 A2 ist ein gattungsgemäßer Karosserie-Hohlträger mit einem Gewindeeinlegerteil bekannt, das eine Buchse ist. Die Buchse ist rotationssymmetrisch aufgebaut und liegt mit ihrem flanschartigen Absatz an einer Außenseite des Hohlträgers und mit ihrer gegenüberliegenden Abstützfläche an einer Abstützwandinnenseite des Hohlträgers. Gemäß einem Ausführungsbeispiel ist die Buchse in einer Durchgangsöffnung eingepresst, so dass die Buchse in axialer und radialer Richtung mit einer Einpresskraft beaufschlagt ist. In einem weiteren Ausführungsbeispiel erzeugt ein Endabschnitt der Buchse einen Presssitz mit dem Hohlträger. Um diesen Belastungen stand zu halten, ist die Buchse kompakt mit entsprechend hohem Gewicht ausgeführt.

Die Aufgabe der Erfindung besteht darin, einen Karosserie-Hohlträger mit einem Gewindeeinlegerteil zu schaffen, bei dem mit einfachen Mitteln die Stabilität und Belastbarkeit einer Anschraubverbindung bei reduziertem Gewicht gewährleistet ist.

Diese Aufgabe wird mit den Merkmalen des Anspruches 1 gelöst Vorteilhafte Weiterbildungen der Erfindung sind in den Unteransprüchen offebart.

Gemäß dem kennzeichnenden Teil des neuen Patentanspruches 1 ist das Gewindeeinlegerteil ein Strangprofilabschnitt, der im Bereich der Gewindebohrung einen dicken Materialsteg aufweist. Damit ist im Bereich der Gewindebohrung eine Materialanhäufung geschaffen, aufgrund der eine größere Gewindelänge der Schraube in die Gewindebohrung als beim Stand der Technik einschraubbar ist. Außerdem ist die Stabilität der Anschraubverbindung vorteilhaft erhöht. Die Herstellung eines Strangpressprofils mit dem Querschnitt des Gewindeeinlegerteils ist zudem einfach und kostengünstig möglich. Zur endgültigen Herstellung des Gewindeeinlegerteils muss das Strangprofil lediglich entsprechend den Längsabmessungen des Gewindeeinlegerteils abgelängt werden. Durch den materialstarken Materialsteg kann an das Gewindeeinlegerteil an Stellen geringerer Belastung mit einem Freiraum versehen werden, ohne die Stabilität und Belastbarkeit des Gewindeeinlegerteils insgesamt zu beeinträchtigen.

Gemäß Anspruch 1 weist der Hohlträger außerdem gegenüberliegend zur Abstützfläche eine Aufnahmeöffnung auf, durch die das Gewindeeinlegerteil in den Hohlträger einsteckbar ist. Das Gewindeeinlegerteil weist gegenüberliegend zur Abstützfläche zumindest abschnittsweise einen Abstützrand auf, der die Aufnahmeöffnung seitlich überdeckt und sich an einem Aufnahmeöffnungsrandbereich von der Hohlträgeraußenseite her abstützt.

Vorteilhaft bei diesem Karosserie-Hohlträger mit dem Gewindeeinlegerteil ist, dass zu der Abstützung der Abstützfläche an der Abstützwandinnenseite des Hohlträgers eine zweite Abstützung an der Abstützwandaußenseite der gegenüberliegenden Hohlträgerwand geschaffen ist. Damit ist die von einem am Gewindeeinlegerteil angeschraubten Bauteil eingeleitete Kraft auf die zwei gegenüberliegenden Hohlträgerwände verteilt, wodurch die Verbindung ohne Beschädigung besonders hoch belastbar ist und beispielsweise schwere Bauteile anschraubbar sind. Die durch die Aufnahmeöffnung in den Hohlträger eingebrachte Schwächung ist durch das Gewindeeinlegerteil und durch den Abstützrand, der sich am Aufnahmeöffnungsrandbereich abstützt, nicht nur aufgehoben, sondern bei geeigneter Auslegung des Gewindeeinlegerteils wird eine wesentliche Verstärkung des Hohlträgers in diesem Bereich erreicht.

In einer besonders bevorzugten Weiterbildung ist gemäß Anspruch 2 der Abstützrand fest, insbesondere durch eine randseitige Schweißung mit dem Aufnahmeöffnungsrandbereich verbunden. Ist der Abstützrand mit dem Aufnahmeöffnungsrandbereich fest verschweißt, so ist die Weiterleitung der in das Gewindeeinlegerteil eingeleiteten Kraft in die zugeordnete Hohlträgerwand sicher gewährleistet und die Aufnahmeöffnung überbrückt. Zudem ist das Gewindeeinlegerteil durch die Verschweißung im Hohlträger sicher gehalten, so dass der Hohlträger auch bei nicht mehr zugänglicher Rückseite verbaubar ist.

Für eine optimale Abstützung des Gewindeeinlegerteils am Hohlträger ist gemäß Anspruch 3 der Abstützrand ein plattenförmiger umlaufender Kragen als Bestandteil einer Abdeckwand, der flächig am Aufnahmeöffnungsrandbereich anliegt. Durch die flächige Anlage des Abstützrandes am Aufnahmeöffnungsrandbereich ist ein optimaler Kräfteverlauf zwischen dem Gewindeeinlegerteil und dem Hohlträger möglich. Ist an dem plattenförmigen, umlaufenden Kragen als Abstützrand an der Abdeckwand des Gewindeeinlegerteils komplett umlaufend eine Schweißnaht ausgeführt, so ist die Stabilität der Verbindung nochmals erhöht.

Gemäß Anspruch 4 weist die Aufnahmeöffnung einen rechteckigen öffnungsquerschnitt auf. Damit ist eine einfache Ausführung der Aufnahmeöffnung geschaffen, die einfach herstellbar ist.

In einer besonders bevorzugten Ausführungsform ist der Hohlträger gemäß Anspruch 5 ein Strangprofil aus Leichtmetall. Damit ist ein im Karosseriebau gebräuchlicher Hohlträger geschaffen, der den heutigen Anforderungen des Fahrzeugsbaus bezüglich Stabilität und Gewichtsoptimierung entspricht.

In einer Weiterbildung gemäß Anspruch 6 weist das Strangprofil mehrere Kammern auf und in einer Kammer ist das Gewindeeinlegerteil eingesetzt. Mit der Mehrkammrigkeit des Strangprofils wird die Stabilität erhöht. Die Auslegung der Kammerngröße ist einerseits von der vorberechneten Stabilitätsanforderung des Strangprofils und andererseits von der Dimensionierung des Gewindeeinlegerteils abhängig.

in einer Weiterbildung nach Anspruch 7 weist die Abdeckwand wenigstens eine Bohrung auf. In dieser Bohrung kann ein Justierstift eingesteckt werden, so dass das Gewindeeinlegerteil bei der Herstellung der Schweißnaht zwischen dem Abstützrand und der Hohlträgerwand positionsgenau gehalten werden kann. Im eingebauten Zustand des Karosserie-Hohlträgers können in die Bohrung z. B. Verkleidungsteile eingeclipst werden.

Anhand einer Zeichnung wird die Erfindung näher erläutert.

Es zeigen:
- Fig. 1: eine schematische, perspektivische Darstellung eines Karosserie-Hohlträgers mit einem Gewindeeinlegerteil,
- Fig. 2: eine schematische Schnittdarstellung des Schnittes A - A von Fig. 1, und
- Fig. 3: eine schematische, perspektivische Darstellung des Gewindeeinlegerteils.

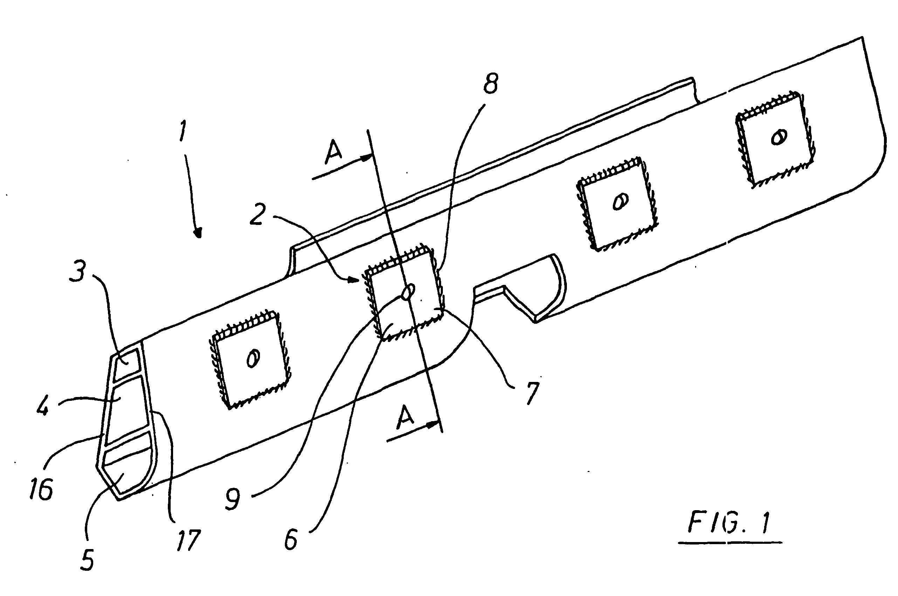

In Fig. 1 ist ein Karosserie-Hohlträger 1 mit einem Gewindeeinlegerteil 2 schematisch und perspektivisch dargestellt. Der Hohlträger 1 ist als Strangprofil ausgeführt, wobei das Strangprofil mehrere Kammern 3, 4 und 5 aufweist. In die mittlere Kammer 4 sind auf die Länge des Hohlträgers 1 verteilt vier Gewindeeinlegerteile 2 eingesetzt. Im eingebauten Zustand des Gewindeeinlegerteils 2 ist nur eine Abdeckwand 6 mit einem umlaufenden Abstützrand 7 zu sehen. Zwischen dem Hohlträger 1 und dem Abstützrand 7 ist umlaufend eine Schweißnaht 8 angebracht. In der Abdeckwand 6 ist zentral eine Bohrung 9 angeordnet.

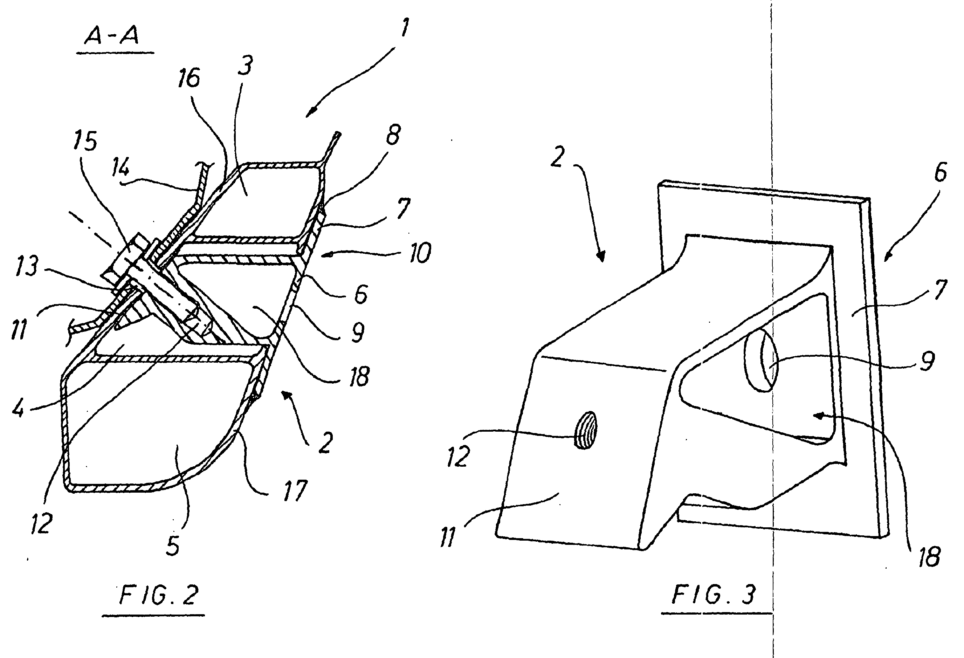

In Fig. 2 ist schematisch eine Schnittdarstellung des Schnittes A - A von Fig. 1 dargestellt. Der ais Strangprofil hergestellte Hohlträger 1 ist in die Kammern 3, 4 und 5 unterteilt. In der mittleren Kammer 4 ist in eine Hohlträgerwand 17 eine Aufnahmeöffnung 10 eingebracht, in die das Gewindeeinlegerteil 2 in den Hohlträger 1 eingesteckt ist. Der Abstützrand 7 liegt flächig an der Hohlträgerwand 17 an und stützt sich im Aufnahmeöffnungsrandbereich am Hohlträger 1 ab. Einer der Aufnahmeöffnung 10 gegenüberliegenden Hohlträgerwand 16 in der Kammer 4 ist eine Abstützfläche 11 des Gewindeeinlegerteils 2 zugeordnet. Die Abstützfläche 11 stützt sich an der Innenseite der Hohlträgerwand 16 ab. Eine Gewindebohrung 12, die im Gewindeeinlegerteil 2 im Bereich der Abstützfläche 11 angeordnet ist fluchtet mit einer zugeordneten Hohlträgerbohrung 13. Ein Anbauteil 14 ist mittels einer Schraube 15 an den Hohlträger 1 von außen angeschraubt. Die Schraube 15 ist durch die Hohlträgerbohrung 13 in die Gewindebohrung 12 des Gewindeeinlegerteils 2 eingeschraubt.

Die vom Anbauteil 14 über die Schraube 15 einwirkende Kraft auf den Hohlträger 1 wird somit durch das Gewindeeinlegerteil 2 auf die beiden gegenüberliegenden Hohlträgerwände 16 und 17 vorteilhaft verteilt. Die Schraube 15 kann aufgrund einer Materialanhäufung im Bereich der Gewindebohrung 12 des Gewindeeinlegerteils 2 komplett in die Gewindebohrung 12 eingeschraubt werden, wodurch die Stabilität der Anschraubverbindung aufgrund der eingeschraubten Gewindelänge erhöht wird.

Bei einer vorgeschalteten Berechnung bezüglich der Kraftverläufe und der damit geforderten Stabilitätsbereiche des Gewindeeinlegerteils 2 kann auch ein Freiraum 18 zur Gewichtseinsparung ausgebildet sein.

In Fig. 3 ist schematisch und perspektivisch das Gewindeeinlegerteil 2 dargestellt. Dabei ist die Gewindebohrung 12 im Bereich der Abstützfläche 11 zu erkennen. Die Bohrung 9 in der Abdeckwand 6 kann zur Justierung des Gewindeeinlegerteils 2 in der Aufnahmeöffnung 10 bei der Herstellung der Schweißnaht 8 verwendet werden. Der Abstützrand 7 ist als plattenförmiger umlaufender Kragen ausgeführt.

## Patentansprüche

1. Karosserie-Hohlträger mit einem Gewindeeinlegerteil (2),
welches im Hohlträger (1) aufgenommen und fixiert ist und sich mit einer Abstützfläche (11) an einer Abstützwandinnenseite des Hohlträgers (1) abstützt, und
mit wenigstens einer Gewindebohrung (12) im Gewindeeinlegerteil (2) im Bereich der Abstützfläche (11), wobei die wenigstens eine Gewindebohrung (12) mit einer zugeordneten Hohlträgerbohrung fluchtet, so dass zur Herstellung einer Anschraubverbindung von der Hohlträgeraußenseite her eine Schraube (15) einschraubbar ist,
wobei der Hohlträger (1) gegenüberliegend zur Abstützfläche (11) eine Aufnahmeöffnung (10) aufweist, durch die das Gewindeeinlegerteil (2) in den Hohlträger (1) einsteckbar ist, und
wobei das Gewindeeinlegerteil (2) gegenüberliegend zur Abstützfläche (11) zumindest abschnittsweise einen Abstützrand (7) aufweist, der die Aufnahmeöffnung (10) seitlich überdeckt und sich an einem Aufnahmeöffnungsrandbereich von der Hohlträgeraußenseite her abstützt
**dadurch gekennzeichnet,**
**dass** das Gewindeeinlegerteil (2) ein Strangprofilabschnitt ist, und
**dass** der Strangprofilabschnitt im Bereich der Gewindebohrung (12) einen dicken Materialsteg aufweist.

2. Karosserie-Hohlträger nach Anspruch 1, **dadurch gekennzeichnet, dass** der Abstützrand (7) fest, insbesondere durch eine randseitige Schweißung (8) mit dem Aufnahmeöffnungsrandbereich verbunden ist.

3. Karosserie-Hohlträger nach Anspruch 1 oder 2, **dadurch gekennzeichnet, dass** der Abstützrand (7) ein plattenförmiger umlaufender Kragen als Bestandteil einer Abdeckwand (6) ist, der flächig am Aufnahmeöffnungsrandbereich anliegt.

4. Karosserie-Hohlträger nach einem der Ansprüche 1 bis 3, **dadurch gekennzeichnet, dass** die Aufnahmeöffnung (10) einen rechteckigen Öffnungsquerschnitt aufweist.

5. Karosserie-Hohlträger nach einem der Ansprüche 1 bis 4, **dadurch gekennzeichnet, dass** der Hohlträger (1) ein Strangprofil aus Leichtmetall ist.

6. Karosserie-Hohlträger nach Anspruch 5, **dadurch gekennzeichnet, dass** das Strangprofil mehrere Kammern (3, 4, 5) aufweist und in einer Kammer (4) das Gewindeeinlegerteil (2) eingesetzt ist.

7. Karosserie-Hohlträger nach einem der Ansprüche 1 bis 6, **dadurch gekennzeichnet, dass** die Abdeckwand (6) wenigstens eine Bohrung (9) aufweist.

## Claims

1. Hollow member for a vehicle body, comprising a threaded insert (2) received and fixed in the hollow member (1) and supported against an inner face of the supporting wall of the hollow member (1) by means of a supporting surface (11), and comprising at least one threaded hole (12) in the threaded insert (2) in the region of the supporting surface (11), the at least one threaded hole (12) being aligned with an associated hole in the hollow member so that a screw (15) can be screwed in from the outer face of the hollow member in order to produce a screw connection, the hollow member (1) being provided opposite the supporting surface (11) with a locating opening (10) through which the threaded insert (2) can be inserted into the hollow member (1) and the threaded insert (2) being provided at least in sections opposite the supporting surface (11) with a supporting edge (7) which laterally covers the locating opening (10) and is supported from the outer face of the hollow member against an edge region of the locating opening, **characterised in that** the threaded insert (2) is an extruded section and that the extruded section is provided in the region of the threaded hole (12) with a thick material web.

2. Hollow member for a vehicle body according to claim 1, **characterised in that** the supporting edge (7) is rigidly connected to the edge region of the locating opening, in particular by means of an edge weld (8).

3. Hollow member for a vehicle body according to claim 1 or claim 2, **characterised in that** the supporting edge (7) is a plate-like circumferential collar forming part of a cover wall (6) bearing flat against the edge region of the locating opening.

4. Hollow member for a vehicle body according to one of claims 1 to 3, **characterised in that** the locating opening (10) has a rectangular cross section.

5. Hollow member for a vehicle body according to one of claims 1 to 4, **characterised in that** the hollow member (1) is an extruded section made of light metal.

6. Hollow member for a vehicle body according to claim 5, **characterised in that** the extruded section has a plurality of compartments (3, 4, 5) and the threaded insert (2) is inserted into one compartment (4).

7. Hollow member for a vehicle body according to one of claims 1 to 6, **characterised in that** the cover wall (6) has at least one hole (9).

## Revendications

1. Support creux de carrosserie avec un insert fileté (2),
qui est logé et fixé dans le support creux (1) et qui s'appuie avec une surface d'appui (11) sur un côté intérieur de la paroi d'appui du support creux (1), et
avec au moins un trou de filetage (12) dans l'insert fileté (2) dans le secteur de la surface d'appui (11), au moins un trou de filetage (2) s'alignant avec un trou de support creux associé, de sorte qu'une vis (15) peut être vissée à partir du côté extérieur du support creux pour la génération d'un assemblage par vis,
le support creux (1) présentant une ouverture de logement (10) opposée à la surface d'appui (11) et à travers laquelle l'insert fileté (2) est insérable dans le support creux (1), et
l'insert fileté (2) présentant au moins par endroits un bord de soutien (7) opposé à la surface d'appui (11) et qui recouvre latéralement l'ouverture de logement (10) et qui s'appuie sur une zone marginale de l'ouverture de logement à partir du côté extérieur du support creux.
**caractérisée en ce que**
l'insert fileté (2) est une section d'un profil extrudé, et
que la section du profil extrudé présente dans la zone du trou fileté (12) une épaisse branche de matière.

2. Support creux pour carrosserie selon la revendication 1, **caractérisée en ce que** le bord de soutien (7) est relié solidairement à la zone marginale de l'ouverture de logement notamment grâce à une soudure périphérique (8).

3. Support creux pour carrosserie selon la revendication 1 ou 2, **caractérisée en ce que** le bord de soutien (7) est un collet circulaire en forme de plaque en tant que composant d'une paroi de recouvrement posée à plat sur la zone marginale de l'ouverture de logement

4. Support creux pour carrosserie selon l'une des revendications 1 à 3, **caractérisée en ce que** l'ouverture de logement (10) présente une section transversale d'ouverture rectangulaire.

5. Support creux pour carrosserie selon l'une des revendications 1 à 4, **caractérisée en ce que** le support creux (1) est un profile extrudé constitué d'un métal léger.

6. Support creux pour carrosserie selon la revendication 5, **caractérisée en ce que** le profil extrudé présente plusieurs chambres (3, 4, 5) et que l'insert fileté (2) est inséré dans une chambre (4).

7. Support creux pour carrosserie selon l'une des revendications 1 à 6, **caractérisée en ce que** la paroi de recouvrement (6) présente au moins un trou (9).
